# EUROPEAN PATENT SPECIFICATION

(11) **EP 2 957 839 B1**
(45) Date of publication and mention of the grant of the patent: **11.03.2020**
(21) Application number: 13875263.9
(22) Date of filing: 17.10.2013
(51) Int. Cl.: F24H 1/00, F24H 1/18, F24D 19/10

(54) **HOT WATER SUPPLY DEVICE**
WARMWASSERVERSORGUNGSVORRICHTUNG
DISPOSITIF D'ALIMENTATION EN EAU CHAUDE

(30) Priority: 18.02.2013 JP 2013029222
(43) Date of publication of application: 23.12.2015
(73) Proprietor: Mitsubishi Electric Corporation, Tokyo 100-8310 (JP)
(72) Inventor: INABA, Yoshitsugu, Tokyo 100-8310 (JP); MIYASHITA, Shouji, Tokyo 100-8310 (JP); TOYOSHIMA, Masaki, Tokyo 100-8310 (JP); IKEDA, Kazuki, Tokyo 100-8310 (JP)
(74) Representative: Pfenning, Meinig & Partner mbB
(86) International application number: PCT/JP2013/078215
(87) International publication number: WO 2014/125678

(56) References cited:
- WO-A1-2010/067454
- WO-A1-2012/137281
- WO-A1-2012/176325
- JP-A- 2012 117 776
- JP-A- 2012 117 776
- JP-A- 2012 207 846

## Description

### Technical Field

The present invention relates to a hot water supply device including a heat exchanger that heats low temperature water such as tap water or well water.

### Background Art

As a conventional technology, a heat pump type hot water supply device that uses heat in the atmosphere to heat low temperature water is known. The hot water supply device of the conventional technology includes a water heating heat exchanger that performs heat exchange between a refrigerant having taken in heat from the atmosphere and low temperature water. The water heating heat exchanger includes a pipe through which low temperature water flows and is heated. If water rich in hardness component such as calcium is used as low temperature water, when the low temperature water is heated in the water heating heat exchanger, the calcium component in the water is likely to be deposited in a pipe as scale (solid precipitate) such as calcium carbonate.

If the scale is deposited in the pipe, heat from a refrigerant is hardly transferred to water flowing through the pipe, which may reduce heating performance. Also, if the scale is accumulated in the pipe, channel resistance of the pipe increase, which may increase power consumption of a pump or the like that feeds the low temperature water to the water heating heat exchanger, or reducing an amount of water flowing through the pipe to reduce hot water supply performance. Thus, for example, in a conventional technology described in Patent Literature 1, a cleaning fluid is pulsed and poured into a hole to remove a deposit on a hole wall by a flow of the cleaning fluid.
Patent Literature 2 describes a hot water supply device with a circulation circuit.

### Citation List

### Patent Literature

Patent Literature 1: Japanese Patent Laid-Open No. 2004-176477
Patent Literature 2: WO 2012/176325 A1
Patent Literature 3: WO 2012/137281 A1 showing a hot water supply device according to the preamble of claim 1.

### Summary of the Invention

### Technical Problem

In the above described conventional technology, pressure of the cleaning fluid is always varied to positive pressure and negative pressure to suck and discharge the deposit in the hole. However, when this method is applied to a hot water supply device, that is, when a flow rate of hot or cold water flowing through a pipe of a water heating heat exchanger is always varied, it is difficult to control a hot water delivery temperature of high temperature water flowing out of the heat exchanger, and an error or the like may occur to stop operation of the hot water supply device.

The present invention is achieved to solve the problem as described above, and has an object to provide a hot water supply device capable of appropriately changing a flow rate of hot or cold water flowing through a circulation circuit to prevent deposition of alien substance such as scale, and stably perform a heating operation.

### Means for Solving the Problem

The hot water supply device of the present invention comprising: a heating device that heats hot or cold water; a circulation circuit configured to include a channel for hot or cold water provided in the heating device, and capable of circulating hot or cold water through the heating device; a circulation device that uses the circulation circuit to circulate hot or cold water through the heating device; and a control device that controls the heating device and the circulation device, uses the circulation device to circulate hot or cold water through the circulation circuit, and performs a heating operation for heating the hot or cold water with the heating device, wherein when performing the heating operation, the control device controls the circulation device to perform a steady operation for maintaining a circulation flow rate of hot or cold water flowing through the circulation circuit at a preset steady flow rate, and a pulsing operation for temporarily increasing and reducing the circulation flow rate with respect to the steady flow rate, and maintains a flow rate difference between a maximum value and a minimum value of the circulation flow rate during the pulsing operation at a reference value or larger at which deposition of alien substance in the circulation circuit can be prevented.

### Advantageous Effects of Invention

According to the present invention, during a heating operation, minimum necessary hot or cold water may be circulated through a circulation circuit including a channel of a heating device, and also a circulation flow rate may be pulsed with a sufficient amplitude. This allows the heating operation to be stably performed, and can prevent hot or cold water from remaining in the circulation circuit, and prevent alien substance in hot or cold water from depositing in the circulation circuit.

### Brief Description of the Drawings

Fig. 1 is a configuration diagram of a hot water storage type hot water supply device according to Embodiment 1 of the present invention.
Figure 2 is a characteristic diagram showing changes of the circulation flow rate of hot or cold water achieved by the scale preventing control in Embodiment 1 of the present invention.
Figure 3 is a characteristic diagram of a set value of the steady flow rate being increased during an ongoing heating-up operation.
Figure 4 is a characteristic diagram showing control of a circulation flow rate when the target heating temperature of the heating operation is lower than the scale generation temperature in Embodiment 2 of the present invention.
Figure 5 is a characteristic diagram showing control of a circulation flow rate when the target heating temperature of the heating operation is the scale generation temperature or higher.
Figure 6 is a flowchart of an example of control performed by the control device in Embodiment 3 of the present invention.
Figure 7 is a configuration diagram of a hot water storage type hot water supply device according to Embodiment 4 of the present invention.
Figure 8 is a configuration diagram of a hot water storage type hot water supply device according to Embodiment 5 of the present invention.
Figure 9 is a configuration diagram of a variation to Embodiments 1 to 5 of the present invention.

### Description of Embodiments

### Embodiment 1

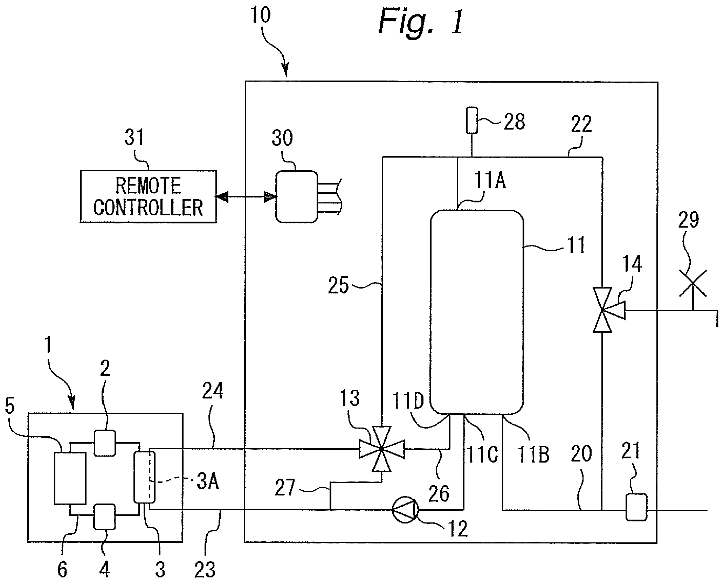

Now, with reference to Figures 1 to 3, Embodiment 1 of the present invention will be described. In this embodiment, a hot water storage type hot water supply device using a heat pump is taken as an example. In the drawings used herein, like components are denoted by like reference numerals, and overlapping descriptions will be omitted. First, Figure 1 is a configuration diagram of a hot water storage type hot water supply device according to Embodiment 1 of the present invention. As shown in Figure 1, the hot water supply device includes a heat pump unit 1 as a heating device that heats hot or cold water, and a tank unit 10. The heat pump unit 1 includes a compressor 2, a water heating heat exchanger 3, an expansion valve 4, and an evaporator 5 annularly connected by a refrigerant pipe 6, and constitutes a refrigeration cycle (heat pump cycle).

The water heating heat exchanger 3 includes a primary channel connected to the refrigerant pipe 6 and through which a refrigerant flows, and a secondary channel 3A into which low temperature water flows from a hot water storage tank 11 described later. The water heating heat exchanger 3 is configured so as to perform heat transfer between a high temperature refrigerant and low temperature water, and thus heat the low temperature water flowing through the secondary channel 3A to generate high temperature water, and return the high temperature water to the tank unit 10. In order to generate high temperature water by using the heat pump unit 1, it is preferable that carbon dioxide is used as a refrigerant, and the heat pump cycle is operated at pressure higher than critical pressure.

Next, the tank unit 10 will be described. The tank unit 10 includes a hot water storage tank 11, a circulation pump 12, a four-way valve 13, and a hot water supply mixing valve 14. The hot water storage tank 11 stores hot water heated by the heat pump unit 1, and is constituted by a sealed tank. The hot water storage tank 11 includes a hot water inlet and outlet 11A placed in an upper portion of the tank, and a water inlet 11B, a water outlet 11C, and a water return port 11D placed in a lower portion of the hot water storage tank 11.

High temperature water heated by the heat pump unit 1 flows from the hot water inlet and outlet 11A into the hot water storage tank 11, and low temperature water flows from the water inlet 11B into the hot water storage tank 11. Thus, in the hot water storage tank 11, temperature stratification is formed in which high temperature water remains on an upper side, and low temperature water remains on a lower side. "Hot or cold water" herein refers to either hot water or cold water, and "high temperature water" refers to hot water remaining in an upper portion of the hot water storage tank 11 or hot water having a temperature equal thereto. "Low temperature water" refers to water remaining in a lower portion of the hot water storage tank 11 or water having a temperature equal thereto, or tap water or well water, or the like supplied from a water supply pipe 20 described later, and having a temperature lower than the high temperature water.

The circulation pump 12 uses a circulation circuit described later to circulate hot or cold water in the hot water storage tank 11 to the secondary channel 3A of the water heating heat exchanger 3, and is constituted by an electric pump or the like. The circulation pump 12 shows a specific example of a circulation device in this embodiment. The four-way valve 13 is constituted by, for example, an electromagnetic valve having four ports, and switches channels of hot or cold water according to an operation mode of the hot water supply device as described later. The hot water supply mixing valve 14 is constituted by, for example, an electromagnetically-driven three-way valve having two inlet ports and one outlet port, and mixes high temperature water supplied by either the heat pump unit 1 or the hot water storage tank 11 and low temperature water such as tap water to generate hot water at a desired temperature.

The tank unit 10 also includes a water supply pipe 20, a hot water supply pipe 22, a heat pump going pipe 23, a heat pump return pipe 24, a tank upper portion return pipe 25, a bypass pipe 26, or the like. The water supply pipe 20 is connected to the water inlet 11B of the hot water storage tank 11 and one inlet port of the hot water supply mixing valve 14, and supplies low temperature water such as tap water or well water from outside to the connections. The water supply pipe 20 has a pressure reducing valve 21 that maintains constant supply pressure of low temperature water. The hot water supply pipe 22 supplies high temperature water from the heat pump unit 1 and the hot water storage tank 11 to another inlet port of the hot water supply mixing valve 14.

The heat pump going pipe 23 connects the water outlet 11C of the hot water storage tank 11 and an inlet of the secondary channel 3A of the water heating heat exchanger 3, and causes low temperature water having flowed out of the lower portion of the hot water storage tank 11 to flow into the secondary channel 3A of the water heating heat exchanger 3. The circulation pump 12 is provided in a middle of the heat pump going pipe 23. The heat pump return pipe 24 connects an outlet of the secondary channel 3A and one port of the four-way valve 13, and returns high temperature water having flowed out of the water heating heat exchanger 3 to the tank unit 10.

One ends of the tank upper portion return pipe 25 and the bypass pipe 26 are individually connected to the other ports of the four-way valve 13. The other end of the tank upper portion return pipe 25 meets the hot water supply pipe 22 and is connected to the hot water inlet and outlet 11A of the hot water storage tank 11. The other end of the bypass pipe 26 is connected to the water return port 11D of the hot water storage tank 11. Another bypass pipe 27 is connected to the remaining port of the four-way valve 13, and is connected to the heat pump going pipe 23 on a downstream side of the circulation pump 12. The hot water storage tank 11 includes an escape valve 28 for escaping pressure in the tank to the outside when the pressure is excessive.

A hot water supply tap 29 is an example of a target to which hot water is supplied by the hot water supply device, and connected to the outlet port of the hot water supply mixing valve 14. The present invention does not restrictively supply hot water to the hot water supply tap 29, but may supply hot water to a shower, a bathtub, a hot water circulation type heater, or the like. The tank unit 10 also includes, in addition to the devices and the pipes described above, a heat exchanger for reheating bathtub water, valves, pipes, or the like, but these are not related to the contents of this embodiment, and thus illustrations and descriptions thereof will be omitted.

In Embodiment 1, the circulation circuit for circulating hot or cold water through the heat pump unit 1 is constituted by the four-way valve 13, the heat pump going pipe 23, the heat pump return pipe 24, the tank upper portion return pipe 25, and the secondary channel 3A of the water heating heat exchanger 3.

Next, a control system of the hot water supply device will be described. The tank unit 10 includes a control device 30 that controls an operation state of the hot water supply device. The control device 30 is constituted by, for example, a microcomputer or the like, and includes a storage circuit including a ROM, a RAM, a non-volatile memory, or the like, a processor (CPU) that performs predetermined arithmetic processing based on a program stored in the storage circuit, and an I/O port that inputs and outputs an external signal to and from the processor. Various sensors for detecting the operation state of the hot water supply device are connected to an input side of the control device 30. The sensors include, for example, a tank temperature sensor for detecting temperature distribution in the hot water storage tank 11 to calculate an amount of stored hot water, a hot water supply flow rate sensor for detecting a flow rate of hot water supplied to the hot water supply tap 29, a hot water supply temperature sensor for detecting a hot water supply temperature, a circulation flow rate sensor for detecting a flow rate of hot or cold water flowing through the secondary channel 3A of the water heating heat exchanger 3, or the like. The circulation flow rate sensor is, for example, provided in the heat pump going pipe 23, the heat pump return pipe 24, or the like.

On the other hand, various actuators including the compressor 2 of the heat pump unit 1, the circulation pump 12, the four-way valve 13, and the hot water supply mixing valve 14 are connected to an output side of the control device 30. The control device 30 is configured so as to be communicable with a remote controller 31 provided in the hot water supply device. The remote controller 31 is operated by a user or the like of the hot water supply device to switch an operation mode of the hot water supply device, or set a target heating temperature, a hot water supply temperature, or the like. The control device 30 drives each actuator based on contents of operation and setting performed by the remote controller 31 or the like and an output of each sensor to control the operation state of the hot water supply device and switch the operation mode of the hot water supply device. Specific examples of the operation modes include a heating-up operation, a freeze preventing operation, a hot water supply operation, or the like. Now, the operation modes will be described.

### (Heating-up operation)

In the heating-up operation, the heat pump unit 1 is used to heat (heat up) hot or cold water stored in the hot water storage tank 11. In the heating-up operation, the circulation pump 12 is used to circulate hot or cold water to the secondary channel 3A of the water heating heat exchanger 3, and the heat pump unit 1 is used to heat the hot or cold water, and the heating-up operation is an example of a heating operation. Specifically, the control device 30 performs the heating-up operation when, for example, an amount of hot water in the hot water storage tank 11 is reduced beyond an acceptable limit, or a temperature of hot water in the hot water storage tank 11 is reduced beyond an acceptable limit. In the heating-up operation, with the four-way valve 13 providing communication between the heat pump return pipe 24 and the tank upper portion return pipe 25, the heat pump unit 1 and the circulation pump 12 are operated.

Thus, the low temperature water remaining in the lower portion of the hot water storage tank 11 flows out of the water outlet 11C into the heat pump going pipe 23, and flows through the circulation pump 12 into the secondary channel 3A of the water heating heat exchanger 3. The low temperature water is heated by heat exchange with a high temperature refrigerant in the water heating heat exchanger 3 to turn into high temperature water, which flows out of the secondary channel 3A into the heat pump return pipe 24. The high temperature water having flowed into the heat pump return pipe 24 flows through the four-way valve 13 and the tank upper portion return pipe 25 into the hot water inlet and outlet 11A of the hot water storage tank 11, and is stored in the upper portion of the hot water storage tank 11. The control device 30 finishes the heating-up operation when a sufficient amount of high temperature water is stored in the hot water storage tank 11.

When performing the heating-up operation, the control device 30 sets a target heating temperature based on, for example, a hot water supply temperature set by the remote controller 31, information on temperature of the hot water storage tank 11, outside air temperature, or the like. The target heating temperature is a target temperature that hot or cold water to be heated should reach. The control device 30 drives the heat pump unit 1 and the circulation pump 12 and adjusts an output of the compressor 2 or the like, and thus controls temperature so that the temperature of the high temperature water flowing out of the water heating heat exchanger 3 matches the target heating temperature.

### (Freeze preventing operation)

In the freeze preventing operation, freeze of water remaining in the heat pump going pipe 23 and the heat pump return pipe 24 is prevented under a low temperature environment such as in a cold region or during the night. When determining that freeze may occur based on, for example, an output of an outside air temperature sensor or the like, the control device 30 performs the freeze preventing operation. In the freeze preventing operation, with the four-way valve 13 providing communication between the heat pump return pipe 24 and the bypass pipe 26, the circulation pump 12 is operated. Thus, the low temperature water remaining in the lower portion of the hot water storage tank 11 flows out of the water outlet 11C into the heat pump going pipe 23, sequentially flows through the circulation pump 12, the secondary channel 3A of the water heating heat exchanger 3, the heat pump return pipe 24, the four-way valve 13, and the bypass pipe 26, and is returned to the water return port 11D of the hot water storage tank 11. This can cause water to always flow through the heat pump going pipe 23 and the heat pump return pipe 24 to prevent freeze.

### (Hot water supply operation)

The hot water supply operation is performed when a user of supplied hot water opens the hot water supply tap 29. In the hot water supply operation, the hot water supply mixing valve 14 is controlled according to the hot water supply temperature set by the remote controller 31 or the like, and high temperature water supplied from the hot water storage tank 11 to the hot water supply pipe 22 and low temperature water supplied to the water supply pipe 20 are mixed at an appropriate flow ratio by the hot water supply mixing valve 14 to generate hot water at a desired temperature. The hot water is supplied from the hot water supply mixing valve 14 to the hot water supply tap 29. At this time, the lower portion of the hot water storage tank 11 is refilled with low temperature water from the water supply pipe 20.

### (Scale preventing control)

In the case of performing the heating operation such as the heating-up operation, when hot or cold water is circulated through the secondary channel 3A of the water heating heat exchanger 3, a hardness component such as calcium contained in the hot or cold water is deposited as scale by high heat, and the scale tends to deposit in the secondary channel 3A. Also, even in sections other than the secondary channel 3A in the circulation circuit, scale tends to be deposited, for example, when hot water remains therein. Such tendency is noticeable when water supplied from the water supply pipe 20 has high hardness.

Thus, when performing the heating operation, the control device 30 performs scale preventing control for preventing precipitation and deposition of scale in the circulation circuit by pulsing a circulation flow rate of hot or cold water circulated through the circulation circuit including the secondary channel 3A. Although this embodiment has a main object to prevent deposition of scale in the secondary channel 3A, the present invention may have an object to prevent deposition of scale in the entire circulation circuit. The scale is an example of alien substance in this embodiment, and other alien substance will be described later.

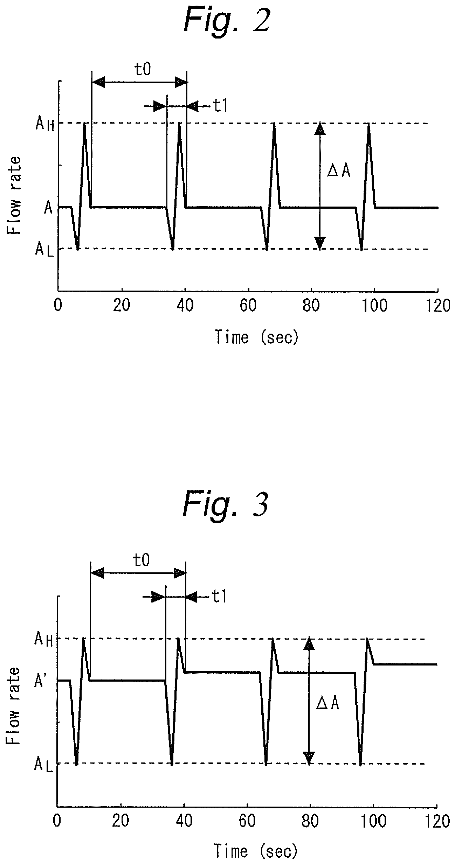

In the scale preventing control, for example, a rotation speed of the circulation pump 12 is changed based on a control signal output from the control device 30 to the circulation pump 12. Thus, a discharge flow rate of the circulation pump 12, that is, a circulation flow rate of hot or cold water circulated through the secondary channel 3A can be reduced and increased, and as shown in Figure 2 mentioned later, a waveform of the circulation flow rate may be pulsed. In this embodiment, the heating-up operation is exemplified as the heating operation, but the heating operation in the present invention also includes a reheating operation or the like described in Embodiment 5.

Figure 2 is a characteristic diagram showing changes of the circulation flow rate of hot or cold water achieved by the scale preventing control in Embodiment 1 of the present invention. Figure 2 shows an example of a waveform of the circulation flow rate, which does not limit the present invention. As shown in Figure 2, in the scale preventing control, when the heating operation is performed, a steady operation for maintaining the circulation flow rate of hot or cold water at a preset steady flow rate A, and a pulsing operation for temporarily and rapidly reducing and increasing the circulation flow rate with respect to the steady flow rate A are performed. During the pulsing operation, a flow rate difference ΔA (=A_{H}-A_{L}) between a maximum flow rate A_{H} as a maximum value of the circulation flow rate and a minimum flow rate A_{L} as a minimum value of the circulation flow rate is maintained at a reference value S or larger.

The effect of preventing deposition of scale tends to increase with increasing flow rate difference ΔA during the pulsing operation, that is, increasing range of variation of the circulation flow rate. Thus, the reference value S is set, for example, as a minimum value of a flow rate difference at which the effect of preventing deposition of scale can be obtained. The minimum flow rate A_{L} is set, for example, as a minimum flow rate required for maintaining a heating function of the heat pump unit 1, and the maximum flow rate A_{H} is set as a flow rate at which the flow rate difference ΔA larger than the reference value S can be ensured with respect to the minimum flow rate A_{L}. A rotation speed of the circulation pump 12 and a duration of the rotation speed required for achieving the minimum flow rate A_{L} and the maximum flow rate A_{H} are preset by actual measurement or the like, and stored in the control device 30. Also, an operation pattern of the pulsing operation including a cycle t0 and a duration t1 described later is previously stored in the control device 30.

By the scale preventing control described above, during the heating operation, minimum necessary hot or cold water can be circulated to the secondary channel 3A of the water heating heat exchanger 3, and the circulation flow rate can be pulsed with a sufficient amplitude. Thus, turbulence can be generated in a water flow in the secondary channel 3A, or a flow speed of the water flow can be cyclically changed. This can prevent hot or cold water from remaining in the secondary channel 3A, and prevent scale from depositing in the secondary channel 3A. Further, pulsing of the circulation flow rate spreads to each section in the circulation circuit, and thus the effect of preventing deposition of scale may be produced not only in the secondary channel 3A but also in each section in the circulation circuit. This can prevent narrowing of an inner diameter of the pipe due to deposition of scale, and increase durability and life of the hot water supply device. Also, in the scale preventing control, the circulation flow rate of hot or cold water is pulsed, and also the circulation flow rate is always maintained at the minimum flow rate A_{L} or higher, and thus the heat pump unit 1 can stably heat hot or cold water and smoothly perform the heating operation.

On the other hand, even if the circulation flow rate is maintained at the minimum flow rate A_{L} or higher, frequent pulsing operations may affect the heating operation. Thus, in this embodiment, the pulsing operation is cyclically performed during the steady operations. The duration t1 of the pulsing operation is set to, for example, at least a half or less of the cycle t0 of the pulsing operation, preferably, one third to one fifteenth of the cycle t0. Such setting allows the steady operation to be continued for a sufficient time length (=t0-t1) during the heating operation. Thus, even by cyclically performing the pulsing operation, a time average value of circulation flow rates may be brought close to the steady flow rate A over the entire cycle t0. Thus, similarly to a normal heating operation (when the scale preventing control is not performed), circulated hot or cold water can be stably heated. Also, a temporarily rapid pulsing operation can be performed to further increase the effect of preventing deposition of scale.

In the pulsing operation, with reference to the steady flow rate A, for example, a flow rate reducing operation for reducing the circulation flow rate in a steep edge (wedge) shape, and a flow rate increasing operation for increasing the circulation flow rate similarly in a steep edge shape are continuously performed. In the present invention, the increasing operation may be first performed and then the reducing operation may be performed, but it is more preferable that the reducing operation is first performed and then the increasing operation is performed. This is because when the flow rate is reduced from the maximum flow rate, the circulation pump is reduced in speed or stopped, and the flow rate is indirectly reduced by channel resistance between the circulation pump and a pipe line, while when the flow rate is increased from the minimum flow rate, the flow rate can be directly changed by a capability of the circulation pump. With this control, a large flow rate difference ΔA with respect to the circulation flow rate can be generated in a short time, and also a sufficient performance time for the steady operation can be ensured. In one example of the scale preventing control in Figure 2, the case where the cycle t0 of the pulsing operation is set to about 30 seconds, and the duration t1 of the pulsing operation is set to about 5 to 10 seconds. However, the present invention is not limited to these specific values, but the cycle t0 and the duration t1 of the pulsing operation may be set to any values according to the need in design or the like.

Also, when the heating-up operation is performed as the heating operation, with increasing amount of hot water stored in the hot water storage tank 11, the temperature of hot or cold water supplied from the lower portion of the hot water storage tank 11 to the water heating heat exchanger 3 increases. At this time, as shown in Figure 3, the control device 30 increases the circulation flow rate of hot or cold water to a steady flow rate A' higher than the steady flow rate A described above (A'>A) in order to maintain the temperature of high temperature water flowing out of the water heating heat exchanger 3 to a preset target heating temperature (target heating-up temperature). Figure 3 is a characteristic diagram of a set value of the steady flow rate being increased during an ongoing heating-up operation.

As such, increasing the steady flow rate reduces a flow ratio (A_{H}/A') when the circulation flow rate is increased from the steady flow rate by the flow rate increasing operation described above as compared to an initial flow ratio (A_{H}/A) during the heating-up operation. At this time, for example, if only the flow rate increasing operation is performed as the scale preventing control, the range of variation of the circulation flow rate is reduced, and thus a sufficient effect of preventing deposition of scale cannot be obtained. In contrast, in this embodiment, even if the steady flow rate A is changed, the flow rate difference ΔA as the range of variation of the circulation flow rate can be maintained at a required constant value. Specifically, for example, from a start to a finish of the heating-up operation, a desired flow rate difference ΔA can be cyclically continuously generated. Thus, the effect of preventing deposition of scale can be stably produced irrespective of the progress of the heating-up operation.

### Embodiment 2

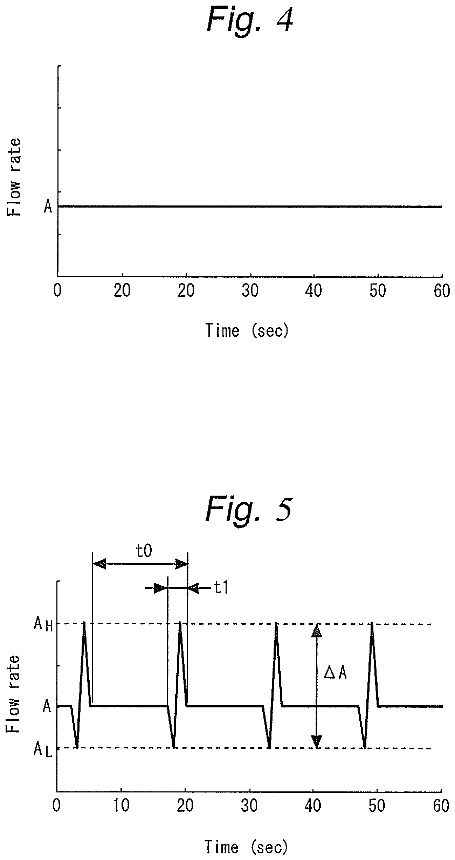

Next, with reference to Figures 4 and 5, Embodiment 2 of the present invention will be described. This embodiment is characterized by switching whether the pulsing operation is performed or not during a heating operation based on a target heating temperature of hot or cold water set in performing the heating operation in addition to the same configuration and control as in Embodiment 1. Specifically, as shown in Figure 4, the control device 30 performs only a steady operation without performing a pulsing operation during the heating operation if the target heating temperature described above is lower than a preset scale generation temperature in performing the heating operation such as a heating-up operation. Figure 4 is a characteristic diagram showing control of a circulation flow rate when the target heating temperature of the heating operation is lower than the scale generation temperature in Embodiment 2 of the present invention.

The scale generation temperature is set, for example, as a minimum value of a water temperature at which scale is easily generated. Specifically, when the temperature of hot or cold water flowing through a secondary channel 3A of a water heating heat exchanger 3 is lower than the scale generation temperature, it is thought that scale is hardly precipitated and deposited even without the pulsing operation being performed by scale preventing control, and thus the pulsing operation is not performed during the heating operation. Then, an output of the circulation pump 12 is maintained in a state where a steady flow rate A is achieved.

On the other hand, Figure 5 is a characteristic diagram showing control of a circulation flow rate when the target heating temperature of the heating operation is the scale generation temperature or higher. In this case, as shown in Embodiment 1, scale is likely to be deposited, and thus the steady operation and the pulsing operation are alternately repeated by the scale preventing control. Figure 4 illustrates a case with the target heating temperature being set to 65°C, and Figure 5 illustrates a case with the target heating temperature being set to 70°C. In this case, the scale generation temperature is set to a temperature higher than 65°C and lower than 70°C. Figures 4 and 5 illustrate a cycle t0 and a duration t1 of the pulsing operation different from those in Embodiment 1.

With this embodiment having such a configuration, substantially the same function effect as in Embodiment 1 can be obtained. In particular, in this embodiment, at low water temperature at which scale hardly deposits, the heating operation can be performed without the pulsing operation being performed. Thus, an effect of preventing deposition of scale at high water temperature can be maintained, and also an extra pulsing operation at low water temperature can be avoided, thereby reducing a load on the circulation pump 12.

### Embodiment 3

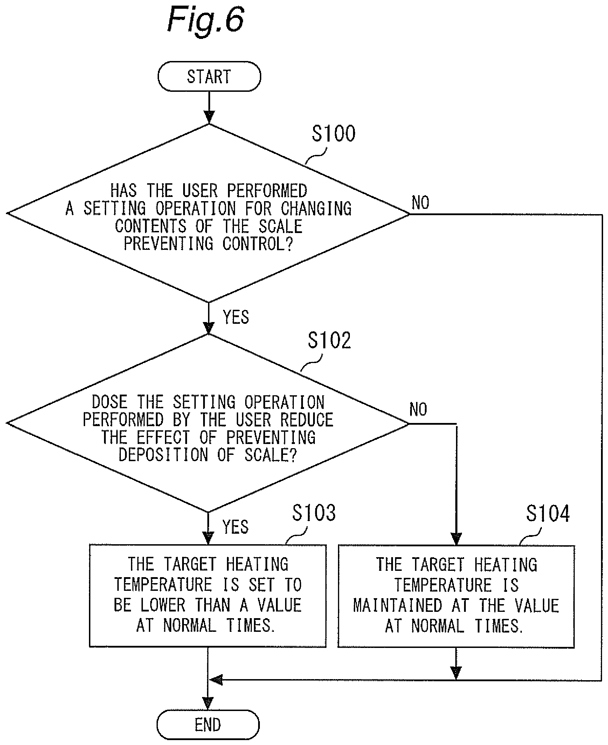

Next, with reference to Figure 6, Embodiment 3 of the present invention will be described. This embodiment is characterized in that a user or the like of a hot water supply device can change contents of scale preventing control in addition to the same configuration and control as in Embodiment 1. The contents of the scale preventing control are previously stored in a control device 30, but sometimes should be changed depending on installation environments of the hot water supply device. Examples of changeable contents of control include selection whether the scale preventing control (a pulsing operation) is performed or not, a time length of a cycle t0, flow rate values of a maximum flow rate A_{H} and a minimum flow rate A_{L}, or the like. In this embodiment, operation means such as a remote controller 31 can be operated to perform a setting operation for changing the contents of control to desired setting.

As a specific example, when the hot water supply device is installed indoors (in particular, near a bedroom or the like), operation noise of the circulation pump 12 is likely to be audible to a resident. In this case, in order to prevent the operation noise of the circulation pump 12, the user can perform a setting operation for stopping the scale preventing control at bedtime, or a setting operation for increasing the cycle t0 of the pulsing operation or reducing the maximum flow rate A_{H} and the minimum flow rate A_{L} with respect to initial setting of the scale preventing control or the like. Such a setting operation changes a performance state of the pulsing operation by the scale preventing control so that scale is likely to be deposited.

However, when the setting operation such that scale is likely to be deposited is performed as described above, the effect of preventing deposition of scale is reduced. Thus, it is preferable that a target heating temperature of the heating operation is reduced as compared to a target heating temperature at normal times. Specifically, if the user stops the scale preventing control, the control device 30 reduces the target heating temperature set to, for example, 75°C at normal times to 65°C, and performs the heating operation in this state. Also, if setting for increasing the cycle t0 of the pulsing operation or reducing the maximum flow rate A_{H} and the minimum flow rate A_{L} is performed, the target heating temperature is reduced to 70°C, and the heating operation and the scale preventing control are performed in this state. "Normal time" refers to a time when the setting operation for reducing the effect of preventing deposition of scale is not performed.

On the other hand, if the hot water supply device is installed, for example, in a place with relatively large noise, the operation noise of the circulation pump 12 is hardly audible to the resident. Such places include a vicinity of a highway, a vicinity of a plant operated at night, or the like. In this case, the user can perform a setting operation, for example, for reducing the cycle t0 of the pulsing operation, or increasing the maximum flow rate A_{H} and the minimum flow rate A_{L} with respect to initial setting of the scale preventing control.

However, when such a setting operation is performed, variations of the circulation flow rate may be increased to affect temperature control of the hot water supply device. Thus, the control device 30 has a lower limit of the cycle t0, an upper limit of the maximum flow rate A_{H}, a lower limit of the minimum flow rate A_{L}, or the like, and is configured to limit setting ranges of these values. Also, when the user performs setting for increasing the effect of preventing deposition of scale, the control device 30 performs the heating operation based on the target heating temperature (for example, 75°C) at normal times, and performs the scale preventing control.

Figure 6 is a flowchart of an example of control performed by the control device in Embodiment 3 of the present invention. A routine in Figure 6 is repeated during operation of the hot water supply device. In the routine in Figure 6, first in step S100, it is determined whether or not the user has performed a setting operation for changing contents of the scale preventing control. When the determination is yes, the process moves to step S102, and it is determined whether or not the setting operation performed by the user reduces the effect of preventing deposition of scale. When the determination in step S102 is yes, the process moves to step S103, the target heating temperature is set to be lower than a value at normal times. When determination in the step S102 is no, the process moves to step S104, and the target heating temperature is maintained at the value at normal times.

As described above, according to this embodiment, the user can appropriately change the contents of the scale preventing control according to installation environments and use environments of the hot water supply device. Thus, in addition to the effect of Embodiment 1, convenience for the user may be increased. When the user performs the setting operation for reducing the effect of preventing deposition of scale, the control device 30 can reduce the target heating temperature of the heating operation as compared to the value at normal times, and likelihood of deposition of scale can be adjusted according to the setting operation by the user.

### Embodiment 4

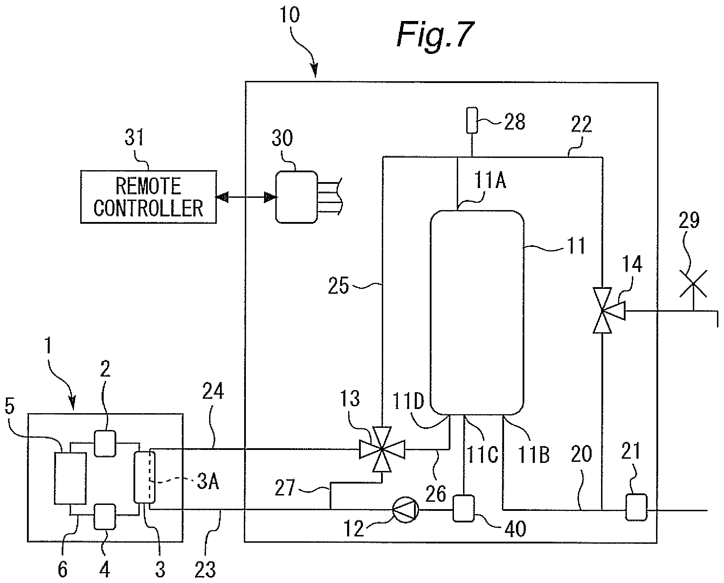

Next, with reference to Figure 7, Embodiment 4 of the present invention will be described. This embodiment is characterized by considering water quality of hot or cold water in addition to the same configuration and control as in Embodiment 1. Figure 7 is a configuration diagram of a hot water storage type hot water supply device according to Embodiment 4 of the present invention. As shown, the hot water supply device according to this embodiment includes a water quality measurement device 40 that measures water quality of hot or cold water flowing through a secondary channel 3A of a water heating heat exchanger 3. The water quality measurement device 40 measures, for example, pH, hardness, or the like of hot or cold water as water quality, is constituted by a pH meter, a hardness meter, or the like, and is provided in a middle of a heat pump going pipe 23.

The control device 30 determines likelihood of deposition of scale (tendency to deposition) based on an output of the water quality measurement device 40, and when it is determined that there is a large tendency to deposition, a target heating temperature of the heating operation may be reduced as compared to a case without such a determination result. As a specific example, when it is determined that calcium hardness of hot or cold water is a first determination value or higher based on the output of the water quality measurement device 40, it is determined that there is an extremely large tendency to precipitate scale. In this case, the target heating temperature set to, for example, 75°C at normal times is reduced to 65°C, and the heating operation is performed with the scale preventing control being stopped. The first determination value is set to, for example, about 150 mg/L.

When it is determined that the calcium hardness of hot or cold water is lower than the first determination value, but a second determination value or higher, it is determined that there is a relatively large tendency to precipitate scale. In this case, for example, the target heating temperature is reduced to 70°C, and the heating operation and the scale preventing control are performed in this state. The second determination value is set to a value lower than the first determination value, for example, about 100 mg/L. The tendency to precipitate scale may be determined based on the output of the water quality measurement device 40, and water quality information obtained via a network such as the Internet.

On the other hand, when the scale preventing control is performed, with decreasing tendency to precipitate scale, that is, with decreasing likelihood of deposition of scale, the cycle t0 of the pulsing operation may be increased or the maximum flow rate A_{H} may be reduced. Thus, with decreasing likelihood of deposition of scale in the secondary channel 3A, the circulation pump 12 can be operated with a lighter load.

With this embodiment having such a configuration, substantially the same function effect as in Embodiment 1 can be obtained. In particular, in this embodiment, at least one of the target heating temperature of the heating operation and the contents of the scale preventing control can be appropriately adjusted according to water quality of hot or cold water, deposition of scale can be prevented, and a load on the circulation pump 12 can be reduced.

### Embodiment 5

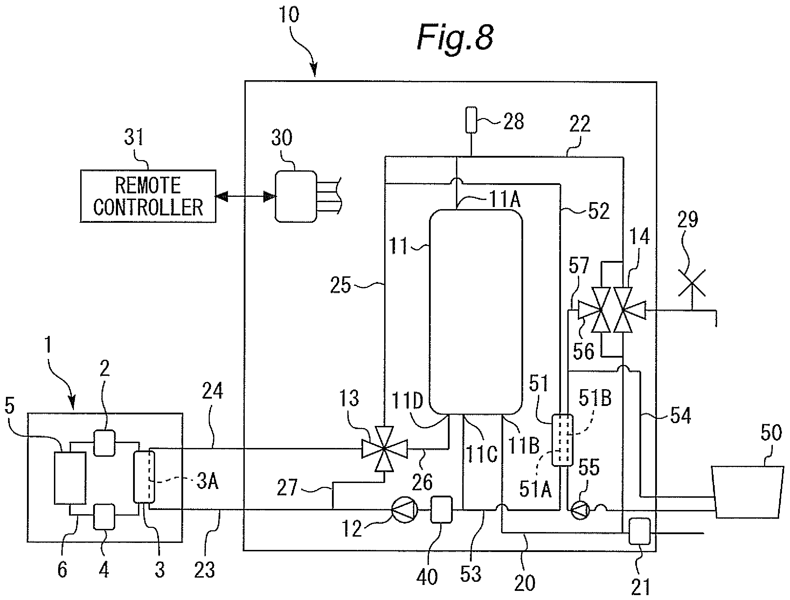

Next, with reference to Figure 8, Embodiment 5 of the present invention will be described. This embodiment is characterized in that a hot water supply device performs a reheating operation as a heating operation in the same configuration and control as in Embodiment 4 described above. Figure 8 is a configuration diagram of a hot water storage type hot water supply device according to Embodiment 5 of the present invention. As shown in Figure 8, the hot water supply device according to this embodiment includes a reheating heat exchanger 51, a heating side flow-in pipe 52, a heating side flow-out pipe 53, a bathtub circulation pipe 54, a bathtub circulation pump 55, a bath mixing valve 56, a bath hot water supply pipe 57, or the like in order to heat bathtub water stored in a bathtub 50.

The reheating heat exchanger 51 constitutes a heating device in this embodiment, and includes a primary pipe 51A through which high temperature water supplied by either a heat pump unit 1 or a hot water storage tank 11 flows, and a secondary pipe 51B through which the bathtub water flows. The reheating heat exchanger 51 performs heat exchange between the high temperature water and the bathtub water to heat (reheat) the bathtub water. The heating side flow-in pipe 52 connects an inlet of the primary pipe 51A and a tank upper portion return pipe 25, and the heating side flow-out pipe 53 connects an outlet of the primary pipe 51A and a heat pump going pipe 23. A connection between the heating side flow-out pipe 53 and the heat pump going pipe 23 is placed on an upstream side of a circulation pump 12 and a water quality measurement device 40 (on a side closer to the hot water storage tank 11).

On the other hand, the bathtub circulation pipe 54 circulates bathtub water between the bathtub 50 and the reheating heat exchanger 51, and opposite ends of the bathtub circulation pipe 54 are connected to the bathtub 50. In a middle of the bathtub circulation pipe 54, the secondary pipe 51B of the reheating heat exchanger 51 and a bathtub circulation pump 55 are provided. The bathtub circulation pump 55 circulates bathtub water between the bathtub 50 and the reheating heat exchanger 51 through the bathtub circulation pipe 54. In this embodiment, the secondary pipe 51B of the reheating heat exchanger 51 and the bathtub circulation pipe 54 are specific examples of the circulation circuit, and the bathtub circulation pump 55 is a specific example of a circulation device.

The bath mixing valve 56 is constituted by a three-way valve or the like similar to a hot water supply mixing valve 14, and two inlet ports of the bath mixing valve 56 are connected to a water supply pipe 20 and a hot water supply pipe 22, respectively, in parallel with the hot water supply mixing valve 14. An outlet port of the bath mixing valve 56 is connected to the bathtub circulation pipe 54 through the bath hot water supply pipe 57. The bath mixing valve 56 mixes high temperature water supplied by either the heat pump unit 1 or the hot water storage tank 11 and low temperature water such as tap water to generate hot water at desired temperature, and supplies the hot water to the bathtub circulation pipe 54. The bathtub circulation pump 55 and the bath mixing valve 56 are controlled by the control device 30.

Next, two types of reheating operations performed as the heating operation by the hot water supply device of this embodiment will be described. In the reheating operation, high temperature water supplied to the primary pipe 51A of the reheating heat exchanger 51 by either the heat pump unit 1 or the hot water storage tank 11 is used to heat (reheat) bathtub water circulated through the secondary pipe 51B. In the description below, a reheating operation using high temperature water from the hot water storage tank 11 is referred to as a hot water storage reheating operation, and a reheating operation using high temperature water obtained from the heat pump unit 1 is referred to as a direct reheating operation.

### (Hot water storage reheating operation)

When the control device 30 performs the hot water storage reheating operation, the four-way valve 13 provides mutual communication between the bypass pipes 26, 27 and closes ends of the heat pump return pipe 24 and the tank upper portion return pipe 25. The circulation pump 12 and the bathtub circulation pump 55 are then operated. Thus, high temperature water flows out of a hot water inlet and outlet 11A of the hot water storage tank 11. The high temperature water flows through a part of the tank upper portion return pipe 25 and the heating side flow-in pipe 52 into the primary pipe 51A of the reheating heat exchanger 51, heats the bathtub water in the reheating heat exchanger 51, and is thus reduced in temperature. Then, hot water having flowed out of the primary pipe 51A sequentially flows through the heating side flow-out pipe 53, a part of the heat pump going pipe 23, the circulation pump 12, the bypass pipe 27, the four-way valve 13, and the bypass pipe 26, and is returned to a water return port 11D of the hot water storage tank 11. On the other hand, bathtub water in the bathtub 50 flows through the bathtub circulation pipe 54 into the secondary pipe 51B of the reheating heat exchanger 51, is heated by the reheating heat exchanger 51, and then returned through the bathtub circulation pipe 54 to the bathtub 50.

### (Direct reheating operation)

When the direct reheating operation is performed, the four-way valve 13 provides communication between the heat pump return pipe 24 and the tank upper portion return pipe 25 and closes ends of the bypass pipes 26, 27. Then, the heat pump unit 1, the circulation pump 12, and the bathtub circulation pump 55 are operated. Thus, high temperature water heated by the water heating heat exchanger 3 sequentially flows through the heat pump return pipe 24, the four-way valve 13, the tank upper portion return pipe 25, the heating side flow-in pipe 52, the reheating heat exchanger 51, the heat pump going pipe 23, and the circulation pump 12, and is returned to the water heating heat exchanger 3. The high temperature water heats bathtub water circulated through the bathtub circulation pipe 54 as in the hot water storage reheating operation.

When performing the two types of reheating operations described above, the control device 30 changes a rotation speed (that is, a discharge flow rate) of the bathtub circulation pump 55, and increases and reduces the circulation flow rate of hot or cold water circulated through the secondary pipe 51B. Thus, as in the scale preventing control described above, the control device 30 performs a steady operation and a pulsing operation, and pulses a circulation flow rate of hot or cold water flowing through the secondary pipe 51B. This control can prevent a hardness component in bathtub water from being deposited as scale in the circulation circuit (in particular, in the secondary pipe 51B). Also, for example, alien substance such as dross, hair or sebum mixed in the bathtub water can be prevented from depositing in the circulation circuit. Thus, both the hot water storage reheating operation and the direct reheating operation can prevent deposition of scale, and stably heat the bathtub water.

In Embodiments 1 to 5 described above, the pulsing operation of the circulation flow rate is performed in the heating-up operation, the hot water storage reheating operation, and the direct reheating operation. However, the present invention is not limited to them, for example, the circulation flow rate of hot or cold water circulated through the heat pump unit 1 may be pulsed also in a hot water supply operation in which high temperature water heated by the heat pump unit 1 is directly supplied from the hot water supply mixing valve 14 to the hot water supply tap 29. In Embodiments 1 to 4, the circulation flow rate is pulsed to prevent deposition of scale, but as in Embodiment 5, the circulation flow rate may be pulsed to prevent dust or the like in hot or cold water from depositing in the circulation circuit.

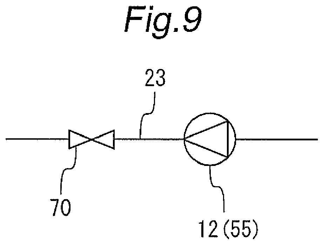

In Embodiments 1 to 5, the case of performing the pulsing operation by controlling the rotation speeds of the circulation pump 12 and the bathtub circulation pump 55 is exemplified. However, the present invention is not limited to this, but for example as in a variation in Figure 9, a flow control valve 70 is provided, for example, on a discharge side of the circulation pump 12 (or the bathtub circulation pump 55), and the control device 30 changes a degree of opening of the flow control valve 70 to pulse the circulation flow rate. Thus, a constant discharge flow rate of the pump can be maintained to reduce a load on the pump. Also, using the flow control valve 70 allows precise control of the circulation flow rate as compared to the case of changing the rotation speed of the pump.

In Embodiment 1, the case of regularly performing the pulsing operation in every cycle t0 is exemplified. However, the present invention is not limited to this, but the pulsing operation may be irregularly performed. In the pulsing operation, the reducing operation and the increasing operation are alternately performed, but for example, one of the reducing operation and the increasing operation may be performed once or a plurality of times, and then the other may be performed once or a plurality of times.

In Embodiments 1 to 5, the individual configurations are exemplified, but the present invention is not limited to the configurations in the respective embodiments, and a plurality of combinable configurations among the configuration of Embodiments 1 to 5 may be combined to achieve a system.

In Embodiments 1 to 4 described above, the case of using the heat pump unit 1 as the heating device is exemplified, but the present invention is not limited to this, and various heating devices other than the heat pump unit 1 may be used. Also, the present invention may be applied to a hot water supply device that does not include the hot water storage tank 11.

### Description of Reference characters

1 heat pump unit (heating device), 2 compressor, 3 water heating heat exchanger, 3A secondary channel (channel, circulation circuit), 10 tank unit, 11 hot water storage tank, 12 circulation pump (circulation device), 13 four-way valve, 14 hot water supply mixing valve, 20 water supply pipe, 22 hot water supply pipe, 23 heat pump going pipe (circulation circuit), 24 heat pump return pipe (circulation circuit), 25 tank upper portion return pipe (circulation circuit), 26,27 bypass pipe, 29 hot water supply tap, 30 control device, 31 remote controller (operation means), 40 water quality measurement device, 50 bathtub, 51 reheating heat exchanger (heating device), 51B secondary pipe (channel, circulation circuit), 54 bathtub circulation pipe (circulation circuit), 55 bathtub circulation pump (circulation device), 56 bath mixing valve, 57 bath hot water supply pipe, 70 flow control valve

## Claims

1. A hot water supply device comprising:
a heating device (1, 51) that heats hot or cold water;
a circulation circuit (3A, 12, 13, 23, 24, 25, 51B, 54, 55) configured to include a channel for hot or cold water provided in the heating device (1, 51), and capable of circulating hot or cold water through the heating device (1, 51);
a circulation device (12, 55) that uses the circulation circuit (3A, 12, 13, 23, 24, 25, 51B, 54, 55) to circulate hot or cold water through the heating device (1, 51); and
a control device (30) that controls the heating device (1, 51) and the circulation device (12, 55), uses the circulation device (12, 55) to circulate hot or cold water through the circulation circuit (3A, 12, 13, 23, 24, 25, 51B, 54, 55), and performs a heating operation for heating the hot or cold water with the heating device (1, 51),
wherein when performing the heating operation, the control device (30) controls the circulation device (12, 55) to perform a steady operation for maintaining a circulation flow rate of hot or cold water flowing through the circulation circuit (3A, 12, 13, 23, 24, 25, 51B, 54, 55) at a preset steady flow rate, and a pulsing operation for temporarily increasing and reducing the circulation flow rate with respect to the steady flow rate, and maintains a flow rate difference between a maximum value and a minimum value of the circulation flow rate during the pulsing operation at a reference value or larger at which deposition of alien substance in the circulation circuit (3A, 12, 13, 23, 24, 25, 51B, 54, 55) can be prevented, **characterized in that** the maximum value of the circulation flow rate is higher than the steady flow rate, and the minimum value of the circulation flow rate is lower than the steady flow rate.

2. The hot water supply device according to claim 1, wherein the control device (30) cyclically performs the pulsing operation during the steady operations, and sets a duration of the pulsing operation to at least a half or less of a cycle of the pulsing operation.

3. The hot water supply device according to claim 1 or 2, wherein when performing the heating operation, the control device (30) sets a target heating temperature that a temperature of hot or cold water should reach, and selects whether the pulsing operation is performed or not based on the target heating temperature.

4. The hot water supply device according to any one of claims 1 to 3, further comprising operation means (31) capable of performing a setting operation for changing a performance state of the pulsing operation,
wherein in a case where a setting operation such that scale as the alien substance is likely to be deposited in the circulation circuit (3A, 12, 13, 23, 24, 25, 51B, 54, 55) is performed, the control device (30) reduces a target heating temperature of hot or cold water heated by the heating operation as compared to a target heating temperature when the setting operation is not performed.

5. The hot water supply device according to any one of claims 1 to 4, further comprising a water quality measurement device (40) that measures water quality of hot or cold water flowing through a channel (3A, 51B) of the heating device (1, 51),
wherein when it is determined that scale as the alien substance is likely to be deposited in the circulation circuit (3A, 12, 13, 23, 24, 25, 51B, 54, 55) based on an output of the water quality measurement device (40), the control device (30) reduces a target heating temperature of hot or cold water heated by the heating operation as compared to a target heating temperature when it is determined that scale is not likely to be deposited.

6. The hot water supply device according to any one of claims 1 to 5, comprising a water quality measurement device (40) that measures water quality of hot or cold water flowing through a channel (3A,51B) of the heating device (1, 51),
wherein the control device (30) determines likelihood of deposition of scale as the alien substance based on an output of the water quality measurement device (40), and with decreasing likelihood of deposition of the scale in the circulation circuit (3A, 12, 13, 23, 24, 25, 51B, 54, 55), a cycle of the pulsing operation cyclically performed during the steady operations is increased, or a maximum value of the circulation flow rate is reduced.

7. The hot water supply device according to any one of claims 1 to 6, wherein the heating device (51) heats bathtub water as hot or cold water stored in a bathtub (50), and
the control device (30) performs the pulsing operation during the heating operation to prevent the alien substance mixed in the bathtub water from depositing in a channel (51B) of the heating device (51).

8. The hot water supply device according to any one of claims 1 to 7, wherein the circulation device (12, 55) includes a pump that sucks and discharges hot or cold water, and a flow control valve (70) that adjusts a circulation flow rate of hot or cold water on a discharge side of the pump, and
the control device (30) is adapted to perform the pulsing operation by changing a degree of opening of the flow control valve (70) to perform the pulsing operation.

## Patentansprüche

1. Warmwasserversorgungseinrichtung, umfassend:
eine Erwärmungseinrichtung (1, 51), die Warm- oder Kaltwasser erwärmt;
einen Zirkulationskreislauf (3A, 12, 13, 23, 24, 25, 51B, 54, 55), der eingerichtet ist, einen Kanal für Warm- oder Kaltwasser, der in der Erwärmungseinrichtung (1, 51) bereitgestellt ist, zu umfassen und in der Lage ist, Warm- oder Kaltwasser durch die Erwärmungseinrichtung (1, 51) hindurch zu zirkulieren;
eine Zirkulationseinrichtung (12, 55), die den Zirkulationskreislauf (3A, 12, 13, 23, 24, 25, 51B, 54, 55) nutzt, um Warm- oder Kaltwasser durch die Erwärmungseinrichtung (1, 51) hindurch zu zirkulieren; und
eine Steuerungseinrichtung (30), die die Erwärmungseinrichtung (1, 51) und die Zirkulationseinrichtung (12, 55) steuert, und die Zirkulationseinrichtung (12, 55) nutzt, um Warm- oder Kaltwasser durch den Zirkulationskreislauf (3A, 12, 13, 23, 24, 25, 51B, 54, 55) hindurch zu zirkulieren, und einen Erwärmungsbetrieb zum Erwärmen des Warm- oder Kaltwassers mit der Erwärmungseinrichtung (1, 51) durchführt,
wobei die Steuerungseinrichtung (30) beim Durchführen des Erwärmungsbetriebs die Zirkulationseinrichtung (12, 55) steuert, einen stabilen Betrieb zum Aufrechterhalten einer Zirkulationsströmungsrate von Warm- oder Kaltwasser, das den Zirkulationskreislauf (3A, 12, 13, 23, 24, 25, 51B, 54, 55) mit einer voreingestellten stabilen Strömungsrate durchströmt, und einen Impulsbetrieb zur temporären Erhöhung und Reduzierung der Zirkulationsströmungsrate in Bezug auf die stabile Strömungsrate durchzuführen, und eine Strömungsratendifferenz aufrechterhält zwischen einem Maximalwert und einem Minimalwert der Zirkulationsströmungsrate während des Impulsbetriebs auf einem Referenzwert oder größer, bei dem Ablagerung von Fremdsubstanz im Zirkulationskreislauf (3A, 12, 13, 23, 24, 25, 51B, 54, 55) verhindert werden kann, **dadurch gekennzeichnet, dass**
der Maximalwert der Zirkulationsströmungsrate höher ist als die stabile Strömungsrate und der Minimalwert der Zirkulationsströmungsrate niedriger ist als die stabile Strömungsrate.

2. Warmwasserversorgungseinrichtung nach Anspruch 1, wobei die Steuerungseinrichtung (30) den Impulsbetrieb während der stabilen Betriebe zyklisch durchführt und eine Dauer des Impulsbetriebs auf zumindest eine Hälfte oder weniger als einen Zyklus des Impulsbetriebs einstellt.

3. Warmwasserversorgungseinrichtung nach Anspruch 1 oder 2, wobei beim Durchführen des Erwärmungsbetriebs die Steuerungseinrichtung (30) eine Zielerwärmungstemperatur, die eine Temperatur von Warm- oder Kaltwasser erreichen soll, einstellt und auswählt, ob der Impulsbetrieb durchgeführt wird oder nicht auf Grundlage der Zielerwärmungstemperatur.

4. Warmwasserversorgungseinrichtung nach einem der Ansprüche 1 bis 3, ferner umfassend ein Betriebsmittel (31), das in der Lage ist, einen Einstellungsbetrieb zum Ändern eines Leistungszustands des Impulsbetriebs durchzuführen,
wobei in einem Fall, wo ein solcher Einstellungsbetrieb so durchgeführt wird, dass es wahrscheinlich ist, dass Kesselstein als die Fremdsubstanz im Zirkulationskreislauf (3A, 12, 13, 23, 24, 25, 51B, 54, 55) abgelagert wird, die Steuerungseinrichtung (30) eine Zielerwärmungstemperatur von Warm- oder Kaltwasser, das durch den Erwärmungsbetrieb erwärmt wird, reduziert gegenüber einer Zielerwärmungstemperatur, wenn der Einstellungsbetrieb nicht durchgeführt wird.

5. Warmwasserversorgungseinrichtung nach einem der Ansprüche 1 bis 4, ferner umfassend eine Wasserqualitätsmessungseinrichtung (40), die eine Wasserqualität von Warm- oder Kaltwasser, das einen Kanal (3A, 51B) der Erwärmungseinrichtung (1, 51) durchströmt, misst,
wobei, wenn bestimmt wird, dass es wahrscheinlich ist, dass Kesselstein als die Fremdsubstanz im Zirkulationskreislauf (3A, 12, 13, 23, 24, 25, 51B, 54, 55) abgelagert wird, auf Grundlage einer Ausgabe der Wasserqualitätsmessungseinrichtung (40), die Steuerungseinrichtung (30) eine Zielerwärmungstemperatur von Warm- oder Kaltwasser, das durch den Erwärmungsbetrieb erwärmt wird, reduziert gegenüber einer Zielerwärmungstemperatur, wenn bestimmt wird, dass es nicht wahrscheinlich ist, dass Kesselstein abgelagert wird.

6. Warmwasserversorgungseinrichtung nach einem der Ansprüche 1 bis 5, umfassend eine Wasserqualitätsmessungseinrichtung (40), die eine Wasserqualität von Warm- oder Kaltwasser, das einen Kanal (3A, 51B) der Erwärmungseinrichtung (1, 51) durchströmt, misst,
wobei die Steuerungseinrichtung (30) die Ablagerungswahrscheinlichkeit von Kesselstein als die Fremdsubstanz bestimmt auf Grundlage einer Ausgabe der Wasserqualitätsmessungseinrichtung (40) und mit abnehmender Ablagerungswahrscheinlichkeit des Kesselsteins im Zirkulationskreislauf (3A, 12, 13, 23, 24, 25, 51B, 54, 55) ein Zyklus des Impulsbetriebs, der während der stabilen Betriebe zyklisch durchgeführt wird, erhöht wird oder ein Maximalwert der Zirkulationsströmungsrate reduziert wird.

7. Warmwasserversorgungseinrichtung nach einem der Ansprüche 1 bis 6, wobei die Erwärmungseinrichtung (51) Badewannenwasser als in einer Badewanne (50) aufgenommenes Warm- oder Kaltwasser erwärmt, und
die Steuerungseinrichtung (30) den Impulsbetrieb während des Erwärmungsbetriebs durchführt, um zu verhindern, dass sich die in das Badewannenwasser eingemischte Fremdsubstanz in einem Kanal (51B) der Erwärmungseinrichtung (51) ablagert.

8. Warmwasserversorgungseinrichtung nach einem der Ansprüche 1 bis 7, wobei die Zirkulationseinrichtung (12, 55) eine Pumpe aufweist, die Warm- oder Kaltwasser ansaugt und abgibt, und ein Strömungssteuerungsventil (70), das eine Zirkulationsströmungsrate von Warm- oder Kaltwasser auf einer Abgabeseite der Pumpe anpasst, und
die Steuerungseinrichtung (30) ausgelegt ist, den Impulsbetrieb durchzuführen durch Ändern eines Öffnungsgrades des Strömungssteuerungsventils (70), um den Impulsbetrieb durchzuführen.

## Revendications

1. Dispositif de fourniture d'eau chaude comprenant :
un dispositif de chauffage (1, 51) qui chauffe de l'eau chaude ou froide ;
un circuit de circulation (3A, 12, 13, 23, 24, 25, 51, 54, 55) configuré pour inclure un canal pour l'eau chaude ou froide prévu dans le dispositif de chauffage (1, 51), et capable de faire circuler de l'eau chaude ou froide à travers le dispositif de chauffage (1, 51) ;
un dispositif de circulation (12, 55) qui utilise le circuit de circulation (3A, 12, 13, 23, 24, 25, 51B, 54, 55) pour faire circuler de l'eau chaude ou froide à travers le dispositif de chauffage (1, 51) ; et
un dispositif de commande (30) qui commande le dispositif de chauffage (1, 51) et le dispositif de circulation (12, 55), utilise le dispositif de circulation (12, 55) pour faire circuler de l'eau chaude ou froide à travers le circuit de circulation (3A, 12, 13, 23, 24, 25, 51B, 54, 55), et effectue une opération de chauffage pour chauffer l'eau chaude ou froide avec le dispositif de chauffage (1, 51),
dans lequel, lors de l'exécution de l'opération de chauffage, le dispositif de commande (30) commande le dispositif de circulation (12, 55) pour effectuer un fonctionnement régulier pour maintenir un débit de circulation de l'eau chaude ou froide s'écoulant à travers le circuit de circulation (3A, 12, 13, 23, 24, 25, 51B, 54, 55) à un débit permanent prédéterminé, et un fonctionnement pulsé pour augmenter et réduire temporairement le débit de circulation par rapport au débit permanent, et maintient une différence de débit entre une valeur maximum et une valeur minimum du débit de circulation pendant le fonctionnement pulsé à une valeur de référence ou plus à laquelle un dépôt de substance étrangère dans le circuit de circulation (3A, 12, 13, 23, 24, 25, 51B, 54, 55) peut être évité, **caractérisé en ce que** la valeur maximum du débit de circulation est supérieure au débit permanent, et la valeur minimum du débit de circulation est inférieure au débit permanent.

2. Dispositif de fourniture d'eau chaude selon la revendication 1, dans lequel le dispositif de commande (30) effectue cycliquement le fonctionnement pulsé pendant les fonctionnements réguliers, et établit une durée du fonctionnement pulsé à au moins une moitié ou moins d'un cycle du fonctionnement pulsé.

3. Dispositif de fourniture d'eau chaude selon la revendication 1 ou 2, dans lequel, lors de l'exécution de l'opération de chauffage, le dispositif de commande (30) établit une température de chauffage cible qu'une température d'eau chaude ou froide devrait atteindre, et sélectionne si le fonctionnement pulsé est effectué ou non sur la base de la température de chauffage cible.

4. Dispositif de fourniture d'eau chaude selon l'une quelconque des revendications 1 à 3, comprenant en outre des moyens d'opération (31) capables d'effectuer une opération de réglage pour changer un état de performance du fonctionnement pulsé,
dans lequel, dans un cas où une opération de réglage telle que de la calamine en tant que substance étrangère est susceptible de se déposer dans le circuit de circulation (3A, 12, 13, 23, 24, 25, 51B, 54, 55) est effectuée, le dispositif de commande (30) réduit une température de chauffage cible de l'eau chaude ou froide chauffée par l'opération de chauffage comparé à une température de chauffage cible lorsque l'opération de réglage n'est pas effectuée.

5. Dispositif de fourniture d'eau chaude selon l'une quelconque des revendications 1 à 4, comprenant en outre un dispositif de mesure de qualité d'eau (40) qui mesure la qualité d'eau de l'eau chaude ou froide s'écoulant à travers un canal (3A, 51B) du dispositif de chauffage (1, 51),
dans lequel, lorsqu'il est déterminé que de la calamine en tant que substance étrangère est susceptible de se déposer dans le circuit de circulation (3A, 12, 13, 23, 24, 25, 51B, 54, 55) sur la base d'une sortie du dispositif de mesure de qualité d'eau (40), le dispositif de commande (30) réduit une température de chauffage cible de l'eau chaude ou froide chauffée par l'opération de chauffage comparé à une température de chauffage cible lorsqu'il est déterminé que de la calamine n'est pas susceptible de se déposer.

6. Dispositif de fourniture d'eau chaude selon l'une quelconque des revendications 1 à 5, comprenant un dispositif de mesure de qualité d'eau (40) qui mesure la qualité d'eau de l'eau chaude ou froide s'écoulant à travers un canal (3A, 51B) du dispositif de chauffage (1, 51),
dans lequel le dispositif de commande (30) détermine la probabilité d'un dépôt de calamine en tant que substance étrangère sur la base d'une sortie du dispositif de mesure de qualité d'eau (40), et avec la diminution de la probabilité de dépôt de la calamine dans le circuit de circulation (3A, 12, 13, 23, 24, 25, 51B, 54, 55), un cycle du fonctionnement pulsé effectué cycliquement pendant les fonctionnements réguliers est augmenté, ou une valeur maximum du débit de circulation est réduite.

7. Dispositif de fourniture d'eau chaude selon l'une quelconque des revendications 1 à 6, dans lequel le dispositif de chauffage (51) chauffe l'eau de la baignoire en tant qu'eau chaude ou froide stockée dans une baignoire (50), et
le dispositif de commande (30) effectue le fonctionnement pulsé pendant l'opération de chauffage pour éviter le dépôt de la substance étrangère mélangée dans l'eau de la baignoire dans un canal (51B) du dispositif de chauffage (51).

8. Dispositif de fourniture d'eau chaude selon l'une quelconque des revendications 1 à 7, dans lequel le dispositif de circulation (12, 55) comprend une pompe qui aspire et refoule l'eau chaude ou froide, et une vanne de régulation de débit (70) qui ajuste un débit de circulation d'eau chaude ou froide d'un côté de refoulement de la pompe, et
le dispositif de commande (30) est conçu pour effectuer le fonctionnement pulsé en changeant un degré d'ouverture de la vanne de régulation de débit (70) pour effectuer le fonctionnement pulsé.
